# EUROPÄISCHE PATENTSCHRIFT

(11) **EP 4 161 808 B1**
(45) Veröffentlichungstag und Bekanntmachung des Hinweises auf die Patenterteilung: **01.05.2024**
(21) Anmeldenummer: 21732186.8
(22) Anmeldetag: 31.05.2021
(51) Int. Cl.: B60R 25/24

(54) **ZUGANGSSYSTEM UND VERFAHREN ZUR ZUGANGSVERIFIZIERUNG**
ACCESS SYSTEM AND ACCESS VERIFICATION METHOD
SYSTÈME D'ACCÈS ET PROCÉDÉ DE VÉRIFICATION D'ACCÈS

(30) Priorität: 05.06.2020 DE 102020207097
(43) Veröffentlichungstag der Anmeldung: 12.04.2023
(73) Patentinhaber: Continental Automotive Technologies GmbH, 30175 Hannover (DE)
(72) Erfinder: SASS, Dieter, 81739 München (DE); FROITZHEIM, Herbert, 81739 München (DE)
(74) Vertreter: Continental Corporation
(86) Internationale Anmeldenummer: PCT/DE2021/200072
(87) Internationale Veröffentlichungsnummer: WO 2021/244712

(56) Entgegenhaltungen:
- EP-A1- 1 873 722
- JP-A- 2015 059 396
- US-A1- 2013 288 659
- US-A1- 2018 154 866

## Beschreibung

Die Erfindung betrifft ein Zugangssystem und ein Verfahren zur Zugangsverifizierung, insbesondere in einem Fahrzeug.

Zugangssysteme sind beschrieben in JP 2015059396 A und US 2018154866 A1.

Schlüssellose Fahrzeug-Zugangs- und Startsysteme wie beispielsweise das Passive Start Entry (PASE) System sind automatische Systeme, um ein Fahrzeug ohne aktive Benutzung eines Autoschlüssels zu entriegeln und durch das bloße Betätigen des Startknopfes zu starten. In dem Fahrzeug ist dabei eine Sendeeinheit angeordnet, welche Signale aussendet. Dies sind beispielsweise elektromagnetische Signale im LF (Low Frequency)- oder HF (High Frequency)-Bereich. Diese Signale werden von einer tragbaren elektronischen Empfangseinheit empfangen, wenn diese sich in der Nähe des Fahrzeugs befindet, und anschließend ausgewertet und/oder weiterverarbeitet. Im Anschluss an die Auswertung und/oder Weiterverarbeitung in der tragbaren elektronischen Empfangseinheit können entsprechende Antwortsignale wieder an die Sendeeinheit im Fahrzeug zurückgesendet werden. Die Antwortsignale werden beispielsweise im UHF-Frequenzband gesendet und können im Fahrzeug von einer Auswerteeinheit ausgewertet werden. Wird ein Antwortsignal als korrekt und somit die tragbare elektronische Empfangseinheit als zum Fahrzeug gehörig erkannt, kann das Fahrzeug entriegelt werden.

Eine tragbare elektronische Empfangseinheit für ein schlüsselloses Fahrzeug-Zugangs- und Startsystem enthält in der Regel eine Transpondereinheit, die als Back-up-Funktion Signale von der Sendeeinheit des Fahrzeugs empfängt, auswertet, weiterverarbeitet und Antwortsignale an das Fahrzeug im LF-Frequenzband über kurze Distanz überträgt, weil beispielsweise das UHF-Frequenzband gestört ist oder weil die Batterieversorgung der portablen elektronischen Empfangseinheit nicht gegeben ist.

Solche Systeme können jedoch relativ leicht angegriffen werden, z.B. durch so genannte Relay-Angriffe.

Auch Systeme welche nach dem so genannten "Charge & Talk"-Prinzip funktionieren, können durch Relay-Angriffe leicht angegriffen werden. Bei Charge & Talk-Systemen wird eine Transpondereinheit durch ein vom Fahrzeug erzeugtes elektromagnetisches Feld mit Energie versorgt und kann nur dann Signale an das Fahrzeug senden, solange die Energieversorgung sichergestellt ist.

Fahrzeugzugangssysteme, bei welchen Daten von der Transpondereinheit zum Fahrzeug mittels Lastmodulation übertragen werden, sind durch Relay-Angriffe zwar weniger angreifbar, haben jedoch nur eine sehr begrenzte Reichweite.

Aufgabe der Erfindung ist es, ein Zugangssystem und ein korrespondierendes Verfahren zur Zugangsverifizierung bereitzustellen, welche eine etwas größere Reichweite aufweisen als vergleichbare Systeme und gleichzeitig gegen Relay-Angriffe zuverlässig geschützt sind.

Diese Aufgabe wird gelöst durch ein Zugangssystem gemäß Anspruch 1, ein Verfahren gemäß Anspruch 8, beziehungsweise ein Fahrzeug gemäß Anspruch 9.

Das erfindungsgemäße Zugangssystem weist ein in einem Fahrzeug angeordnetes Steuergerät und ein tragbares elektronisches Gerät auf, wobei das tragbare elektronische Gerät eine Batterie aufweist die dazu ausgebildet ist, verschiedene weitere Komponenten des tragbaren elektronischen Gerätes mit Energie zu versorgen, das tragbare elektronische Gerät eine Transpondereinheit aufweist, welche durch das Steuergerät drahtlos mit Energie versorgt werden kann, das Steuergerät dazu ausgebildet ist, ein Anfragesignal an das tragbare elektronische Gerät zu senden, das tragbare elektronische Gerät dazu ausgebildet ist, auf den Erhalt eines Anfragesignals hin zu prüfen, ob eine Energieversorgung durch die Batterie möglich ist, das tragbare elektronische Gerät weiterhin dazu ausgebildet ist, wenn eine Energieversorgung durch die Batterie nicht möglich ist, eine drahtlose Energieversorgung der Transpondereinheit durch das Steuergerät bereitzustellen und ein Antwortsignal an das Steuergerät zu senden, und das tragbare elektronische Gerät weiterhin dazu ausgebildet ist, wenn eine Energieversorgung durch die Batterie möglich ist und innerhalb eines bestimmten Zeitraumes vor oder nach dem Empfang des Anfragesignals ein Schalter oder eine Schaltfläche des elektronischen Gerätes durch einen Nutzer betätigt wurde, ein Antwortsignal an das Steuergerät zu senden, wobei das Fahrzeug entriegelt wird, wenn anhand des Antwortsignals das elektronische Gerät als zu dem Fahrzeug gehörig erkannt wird.

Bei ausreichend geladener Batterie ist das Zugangssystem somit vor ungewollten Angriffen, wie beispielsweise Relay-Angriffen, geschützt.

Das Fahrzeug kann verschlossen bleiben, wenn das Steuergerät innerhalb eines bestimmten Zeitraumes nach dem Aussenden eines Anfragesignals von dem tragbaren elektronischen Gerät kein Antwortsignal oder kein gültiges Antwortsignal empfängt.

Dadurch kann verhindert werden, dass das Fahrzeug von unbefugten oder nicht zu dem Fahrzeug gehörigen elektronischen Geräten entriegelt werden kann.

Das Steuergerät kann beispielsweise entweder in regelmäßigen Abständen Anfragesignale aussenden oder nur auf ein auf ein auslösendes Ereignis hin.

Dadurch kann ein schlüsselloser Zugang zu dem Fahrzeug gewährleistet werden.

Das auslösende Ereignis kann das Betätigen eines Türgriffes des Fahrzeugs oder das Detektieren einer Annäherung des elektronischen Gerätes an das Fahrzeug aufweisen.

Werden Anfragesignale nur dann ausgesendet, wenn eine Annäherung des Nutzers an das Fahrzeug detektiert wird, kann Energie gegenüber solchen Systemen gespart werden, welche kontinuierlich Anfragesignale aussenden.

Der bestimmte Zeitraum vor oder nach dem Empfang des Anfragesignals kann beispielsweise wenige Sekunden oder wenige Minuten betragen.

Dies ermöglicht es dem Nutzer die Funktion des elektronischen Gerätes freizugeben, kurz bevor er sich dem Fahrzeug tatsächlich nähert, oder auf ein empfangenes Anfragesignal zu reagieren und seinen Wunsch, das Fahrzeug entriegeln zu wollen, anzuzeigen.

Eine Versorgung mit Energie durch die Batterie kann möglich sein, wenn ein Ladezustand der Batterie einen vorgegebenen Grenzwert überschreitet.

Das elektronische Gerät kann eines aufweisen von einem Fahrzeugschlüssel, Mobiltelefon, Smartphone, Tablet, SmartWatch, Laptop oder Personal Digital Assistant.

Dies sind elektronische Geräte, welche grundsätzlich die Funktion eines Fahrzeugschlüssels übernehmen können.

Es wird weiterhin Verfahren zur Zugangsverifizierung in einem Fahrzeug beschrieben, wobei das Fahrzeug ein Zugangssystem mit einem in dem Fahrzeug angeordneten Steuergerät und einem tragbaren elektronischen Gerät aufweist. Das Verfahren weist auf das Aussenden eines Anfragesignals von dem Steuergerät an das tragbare elektronische Gerät, auf den Erhalt eines Anfragesignals hin, das Prüfen durch das elektronische Gerät, ob eine Energieversorgung durch die Batterie möglich ist, wenn eine Energieversorgung durch die Batterie nicht möglich ist, das Bereitstellen einer drahtlosen Energieversorgung der Transpondereinheit durch das Steuergerät und das Senden eines Antwortsignals von dem elektronischen Gerät an das Steuergerät, und, wenn eine Energieversorgung durch die Batterie möglich ist und innerhalb eines bestimmten Zeitraumes vor oder nach dem Empfang des Anfragesignals ein Schalter oder eine Schaltfläche des elektronischen Gerätes durch einen Nutzer betätigt wurde, das Versorgen der Transpondereinheit mittels der Batterie mit Energie und Senden eines Antwortsignals von dem elektronischen Gerät an das Steuergerät, und das Entriegeln des Fahrzeugs, wenn anhand des Antwortsignals das elektronische Gerät als zu dem Fahrzeug gehörig erkannt wird.

Ein Fahrzeug weist ein Zugangssystem mit einem in einem Fahrzeug angeordneten Steuergerät und einem tragbaren elektronischen Gerät auf. Das tragbare elektronische Gerät weist eine Batterie auf, die dazu ausgebildet ist, verschiedene weitere Komponenten des tragbaren elektronischen Gerätes mit Energie zu versorgen. Das tragbare elektronische Gerät weist weiterhin eine Transpondereinheit auf, welche durch das Steuergerät drahtlos mit Energie versorgt werden kann. Das Steuergerät ist dazu ausgebildet, ein Anfragesignal an das tragbare elektronische Gerät zu senden. Das tragbare elektronische Gerät ist dazu ausgebildet, auf den Erhalt eines Anfragesignals hin zu prüfen, ob eine Energieversorgung durch die Batterie möglich ist. Das tragbare elektronische Gerät ist weiterhin dazu ausgebildet, wenn eine Energieversorgung durch die Batterie nicht möglich ist, eine drahtlose Energieversorgung der Transpondereinheit durch das Steuergerät bereitzustellen und ein Antwortsignal an das Steuergerät zu senden. Das tragbare elektronische Gerät ist weiterhin dazu ausgebildet, wenn eine Energieversorgung durch die Batterie möglich ist und innerhalb eines bestimmten Zeitraumes vor oder nach dem Empfang des Anfragesignals ein Schalter oder eine Schaltfläche des elektronischen Gerätes durch einen Nutzer betätigt wurde, ein Antwortsignal an das Steuergerät zu senden. Das Fahrzeug wird entriegelt, wenn anhand des Antwortsignals das elektronische Gerät als zu dem Fahrzeug gehörig erkannt wird.

Die Erfindung wird nachfolgend anhand der in den Figuren der Zeichnung dargestellten Ausführungsbeispiele näher erläutert. Es zeigt:
- Figur 1: beispielhaft ein Fahrzeug mit einem Zugangssystem gemäß einer Ausführungsform der Erfindung,
- Figur 2: in einer skizzenhaften Darstellung das Prinzip eines Angriffs auf ein schlüsselloses Fahrzeug-Zugangs- und Startsystem,
- Figur 3: in einer skizzenhaften Darstellung ein Zugangssystem gemäß einer Ausführungsform der Erfindung,
- Figur 4: beispielhaft in einem Ablaufdiagramm ein Verfahren gemäß einer Ausführungsform der Erfindung, und
- Figur 5: beispielhaft in einem Ablaufdiagramm ein Verfahren gemäß einer weiteren Ausführungsform der Erfindung.

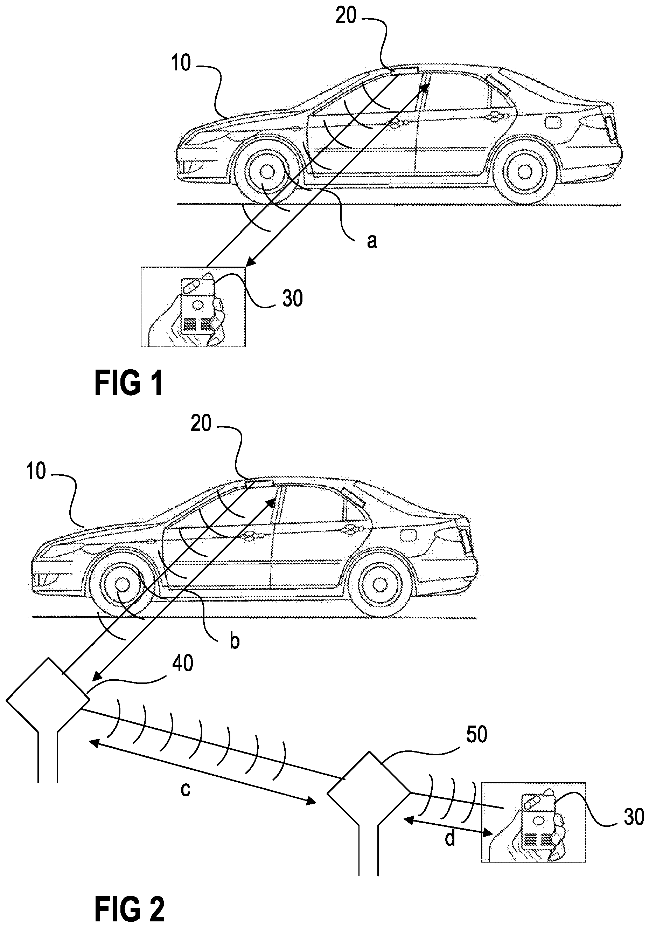

Figur 1 zeigt in schematischer Darstellung das grundsätzliche Prinzip einer Vorrichtung zur Zugangsverifizierung in einem Fahrzeug 10. In dem Fahrzeug 10 ist ein Steuergerät 20 mit einer Sende-/Empfangseinheit (Sende-/Empfangseinheit nicht explizit dargestellt) angeordnet, das dazu ausgebildet ist, Signale auszusenden. Dies sind beispielsweise elektromagnetische Signale im LF (Low Frequency)- oder HF (High Frequency)-Bereich. Diese Signale werden von einem elektronischen Gerät 30 empfangen, wenn dieses sich in der Nähe des Steuergerätes 20 befindet, und anschließend in dem elektronischen Gerät 30 decodiert, ausgewertet und/oder weiterverarbeitet. Im Anschluss an die Auswertung und/oder Weiterverarbeitung in dem elektronischen Gerät 30 können entsprechende Antwortsignale wieder an das Steuergerät 20 zurückgesendet werden. Die Antwortsignale werden beispielsweise im UHF-Frequenzband gesendet und können im Fahrzeug 10 von einer, in Figur 1 nicht dargestellten, Auswerteeinheit ausgewertet werden. Wird das elektronische Gerät 30 als zum Fahrzeug 10 gehörig erkannt, kann das Fahrzeug 10 entriegelt bzw. gestartet werden. Gibt es innerhalb einer definierten Zeit keine korrekte Antwort von dem elektronischen Gerät 30, passiert hingegen nichts.

Zum Empfangen der von dem Steuergerät 20 gesendeten Signale muss sich das elektronische Gerät 30 innerhalb eines bestimmten Radius um das Steuergerät 20 herum befinden. Dieser Radius kann, abhängig von dem verwendeten Kommunikationsstandard, wenige Zentimeter, zum Beispiel 10cm, bis zu mehreren Metern betragen. Daher kann es bei kurzen Reichweiten erforderlich sein, das elektronische Gerät 30 in die Nähe des Steuergerätes 20 zu halten oder im Fahrzeug 10 in eine dafür vorgesehene Vorrichtung einzuführen. Dadurch kann sichergestellt werden, dass sich das elektronische Gerät 30 nahe genug an dem Steuergerät 20 befindet und eine Kommunikation möglich ist.

Das Steuergerät 20 kann kontinuierlich Signale aussenden oder nur auf ein bestimmtes Ereignis hin. Der Stromverbrauch des Steuergerätes 20 beim Aussenden von Signalen ist in der Regel verhältnismäßig hoch. Werden Signale nur auf ein bestimmtes, auslösendes Ereignis hingesendet, kann der Stromverbrauch daher deutlich reduziert werden. Ein solches auslösendes Ereignis kann beispielsweise das Ziehen eines Türgriffs (zum Entriegeln des Fahrzeugs) oder das Betätigen eines Startknopfes (zum Starten des Fahrzeugs) sein. Das heißt, dass das Steuergerät 20 ein oder mehrere Anfragesignale aussendet, sobald beispielsweise der Türgriff oder ein Startknopf des Fahrzeugs 10 betätigt wird. Befindet sich das elektronische Gerät 30 in der Nähe des Steuergerätes 20 und sendet dieses nach dem Empfang eines Anfragesignals ein korrektes Antwortsignal zurück, kann das Fahrzeug 10 entriegelt bzw. gestartet werden. Es sind auch Vorrichtungen bekannt, welche die Annäherung eines Nutzers mittels Sensoren erfassen, z.B. mittels kapazitiver Sensoren im Türgriff. Andere Vorrichtungen erkennen beispielsweise die Annäherung eines Nutzers, wenn zwischen dem elektronischen Gerät 30 und dem Fahrzeug 10 eine Kommunikationsverbindung hergestellt wird, z.B. eine Bluetooth-Verbindung. Der Autorisierungsvorgang kann dann stattfinden, noch bevor der Nutzer den Türgriff tatsächlich betätigt. Viele weitere auslösende Ereignisse sind ebenfalls möglich.

Solche Systeme können jedoch relativ leicht angegriffen werden, z.B. durch so genannte Relay-Angriffe. Dabei kann zum Beispiel unter Verwendung von zwei Geräten, von denen sich eines in der Nähe des Fahrzeuges 10 und das andere in der Nähe des elektronischen Gerätes 30 befindet, eine größere Distanz zwischen dem Fahrzeug 10 und dem elektronischen Gerät 30 überbrückt werden, indem die Funkstrecke des verwendeten Kommunikationskanals (z.B. LF (Low Frequency)- oder HF (High Frequency)- Kommunikationskanal) verlängert wird. Auf diese Weise kann ein Fahrzeug 10 geöffnet und gestartet werden, obwohl sich der Fahrzeugschlüssel (elektronisches Gerät 30) nicht innerhalb der notwendigen Reichweite befindet.

Figur 2 zeigt in schematischer Darstellung das Prinzip eines solchen Relay-Angriffes auf ein schlüsselloses Fahrzeug-Zugangs- und Startsystem durch Verlängerung der Funkstrecke eines Kommunikationskanals. Der Schlüssel mit dem elektronischen Gerät 30 befindet sich in der in Figur 2 gezeigten Darstellung außerhalb der Reichweite der von der Sendeeinheit 20 gesendeten Anfragesignale. Innerhalb des zum Empfangen der Signale notwendigen Radius befindet sich in der Nähe des Fahrzeugs 10 jedoch ein erstes Gerät 40, welches eine Antenne aufweist. Der Abstand des ersten Geräts 40 zu der Sendeeinheit 20 im Fahrzeug 10 wird mit b bezeichnet. Innerhalb der Reichweite des elektronischen Gerätes 30 ist ein zweites Gerät 50 angeordnet, welches ebenfalls eine Antenne aufweist. Der Abstand des zweiten Geräts 50 zum ersten Gerät 40 wird mit c, der Abstand des zweiten Geräts 50 zu dem elektronischen Gerät 30 wird mit d bezeichnet.

Das erste Gerät 40 in der Nähe des Fahrzeugs 10 empfängt die Signale, die von dem Steuergerät 20 ausgesendet werden, und sendet diese an das zweite Gerät 50 weiter. Von dem zweiten Gerät 50 wird das Signal wiederum an das elektronische Gerät 30 gesendet. Um die Signale über eine Distanz c zwischen dem ersten und zweiten Gerät 40, 50, die meist deutlich größer ist als die normale Reichweite von den häufig verwendeten LF- oder HF-Signalen, übertragen zu können, sind in den Geräten 40, 50 z.B. Verstärker und Sendestufen notwendig. Mit dieser Anordnung kann somit eine theoretisch beliebig weite Strecke zwischen dem Fahrzeug 10 und dem elektronischen Gerät 30 überbrückt werden.

Im elektronischen Gerät 30 wird das Signal empfangen, ausgewertet und/oder verarbeitet. Das darauf von dem elektronischen Gerät 30 ausgesendete Antwortsignal kann über dieselbe Anordnung mit dem ersten und zweiten Gerät 40, 50 wieder an das Fahrzeug 10 zurück übertragen werden. Die im Fahrzeug 10 angeordnete Auswerteelektronik detektiert somit zunächst nicht, dass sich das elektronische Gerät nicht innerhalb der Reichweite befindet. Obwohl das elektronische Gerät 30 nicht innerhalb der Reichweite ist, kann das Fahrzeug 10 somit trotzdem geöffnet und auch gestartet werden.

Ohne die Reichweite mittels einer oben beschriebenen Anordnung zu verlängern, könnte ein Fahrzeug 10 beispielsweise auch dann unbefugt geöffnet und gestartet werden, wenn sich das elektronische Gerät 30 innerhalb der erforderlichen Reichweite befindet. Dies kann beispielsweise der Fall sein, wenn das Fahrzeug 10 vor dem Haus eines Nutzers abgestellt wird und sich das elektronische Gerät 30 im Haus an einer Stelle befindet, welche innerhalb der Reichweite liegt. Ein Öffnen des Fahrzeugs 10 ist in einem solchen Fall jedoch auch oft nicht erwünscht.

Es sind verschiedene Verfahren bekannt, um derartige Angriffe und ein unbefugtes Öffnen und Starten des Fahrzeugs 10 zu verhindern. Derartige Verfahren sind jedoch oft aufwendig und bieten oft keinen zu 100% zuverlässigen Schutz vor Relay-Angriffen.

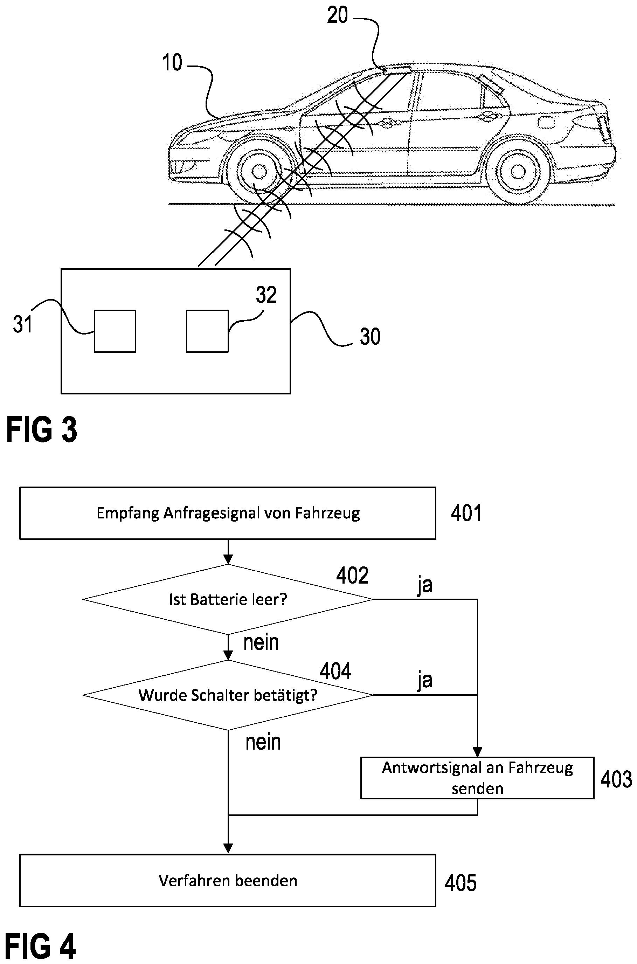

Nun Bezug nehmend auf Figur 3 wird ein Beispiel eines Zugangssystems beschrieben. Das Zugangssystem weist ein in einem Fahrzeug 10 angeordnetes Steuergerät 20 und ein tragbares elektronisches Gerät 30 auf. Das tragbare elektronische Gerät 30 weist eine Transpondereinheit 32 und eine Batterie 31 auf. Die Batterie 31 kann verschiedene (in Figur 3 nicht explizit dargestellte) Komponenten des tragbaren elektronischen Gerätes 30 mit Energie versorgen. Dies können beispielsweise Komponenten sein, welche für herkömmliche passive Zugangssysteme oder RKE-Systeme (remote Keyless Entry) benötigt werden. Die Transpondereinheit 32 ist häufig als Backup-Lösung vorgesehen, beispielsweise für den Fall, dass die normalerweise verwendeten passiven Zugangssysteme oder RKE-Systeme ausfallen, z.B. wenn die entsprechenden Komponenten defekt sind oder eine Versorgung der passiven Zugangssysteme oder RKE-Systeme durch die Batterie 31 nicht möglich ist. Die Transpondereinheit 32 wird in der Regel durch das Steuergerät 20 drahtlos mit Energie versorgt. Eine Energieversorgung durch die Batterie 31 ist beispielsweise dann nicht möglich, wenn der Ladezustand der Batterie 31 unter einen bestimmten Wert gesunken ist. Beispielsweise kann eine Versorgung durch die Batterie 31 nicht mehr gewährleistet werden, wenn der Ladezustand unter 5% beträgt, wobei die Batterie 31 bei einem Ladezustand von 100% vollständig geladen und bei 0% vollständig entladen ist. Ein Ladezustand kann beispielsweise anhand der Batteriespannung bestimmt werden. Ist die Batterie 31 vollständig geladen, weist diese eine gewisse Spannung auf. Entlädt sich die Batterie 31, verringert sich auch die Batteriespannung. Ist die Batteriespannung unter einen bestimmten Wert gesunken, kann eine Versorgung durch die Batterie 31 nicht mehr gewährleistet werden.

Eine drahtlose Versorgung der Transpondereinheit 32 mit Energie ist beispielsweise mittels induktiver Kopplung zweier Induktivitäten (Antennen) möglich, von welchen eine in dem Steuergerät 20 und die andere in dem elektronischen Gerät, z.B. in der Transpondereinheit 32, angeordnet ist (Antennen in Figur 3 nicht explizit dargestellt). Derartige Systeme werden häufig auch als Charge & Talk-Systeme bezeichnet, da eine Kommunikation nur dann möglich ist, wenn Energie durch den Kommunikationspartner (hier das Steuergerät 20) bereitgestellt wird.

Derartige Charge & Talk-Systeme sind jedoch durch oben beschriebene Relay-Angriffe leicht angreifbar.

Das Steuergerät 20 ist dazu ausgebildet, ein Anfragesignal an das tragbare elektronische Gerät 30 zu senden. Anfragesignale können dabei entweder in regelmäßigen Abständen oder auf ein auslösendes Ereignis hin ausgesendet werden. Ein auslösendes Ereignis kann beispielsweise das Annähern des Nutzers an das Fahrzeug 10 oder das Betätigen eines Türgriffes des Fahrzeugs 10 aufweisen. Um das Zugangssystem vor ungewollten Relay-Angriffen zu schützen, prüft das tragbare elektronische Gerät 30 auf den Erhalt eines Anfragesignals hin, ob eine Energieversorgung des tragbaren elektronischen Gerätes 30 durch die Batterie 31 möglich ist. Es wird also beispielsweise ein Ladezustand der Batterie 31 überprüft. Wenn eine Energieversorgung durch die Batterie 31 nicht möglich ist, wird eine drahtlose Energieversorgung der Transpondereinheit 32 durch das Steuergerät 20 erlaubt und ein Antwortsignal von der Transpondereinheit 32 an das Steuergerät 20 gesendet. In einem solchen Fall könnten beispielsweise vom Steuergerät 20 im Fahrzeug weitere Verfahren zur Erkennung von Relay-Angriffen durchgeführt werden. In der Regel wird jedoch ein Zugang zu dem Fahrzeug 10 gewährt, das Fahrzeug 10 also entriegelt, wenn das elektronische Gerät 30 anhand des Antwortsignals als zu dem Fahrzeug 10 gehörig erkannt wird.

Wenn das tragbare elektronische Gerät 30 jedoch feststellt, dass eine Energieversorgung durch die Batterie 31 möglich ist, kann ein Antwortsignal an das Fahrzeug 10 grundsätzlich zunächst unterdrückt werden. In diesem Fall ist es erforderlich, dass ein Nutzer innerhalb eines bestimmten Zeitraumes vor oder nach dem Empfang des Anfragesignals einen Schalter, eine Taste oder eine Schaltfläche des elektronischen Gerätes 30 betätigt. Durch das Betätigen des Schalters oder der Schaltfläche äußert der Nutzer seinen ausdrücklichen Wunsch, das Fahrzeug 10 entriegeln zu wollen. Empfängt ein elektronisches Gerät 30 ein Anfragesignal eines Fahrzeugs 10, ist die Batterie 31 ausreichend geladen und der Wunsch des Nutzers das Fahrzeug 10 zu entriegeln ausdrücklich festgestellt, so kann die Transpondereinheit 32 ein Antwortsignal an das Steuergerät 20 senden. Auch in diesem Fall wird das Fahrzeug 10 entriegelt, wenn anhand des Antwortsignals das elektronische Gerät 30 als zu dem Fahrzeug 10 gehörig erkannt wird.

Bei dem beschriebenen System wird somit bei ausreichend geladener Batterie ein Antwortsignal von dem elektronischen Gerät 30 an das Fahrzeug 10 so lange unterdrückt, solange nicht auch ein Schalter, eine Taste oder eine Schaltfläche des elektronischen Gerätes 30 durch den Nutzer betätigt wurde. Dadurch können Relay-Angriffe für alle Fälle, in welchen von der Batterie 31 ausreichend Energie zur Verfügung gestellt werden kann, effektiv verhindert werden.

Das tragbare elektronische Gerät 30 kann beispielsweise ein Fahrzeugschlüssel, Mobiltelefon, Smartphone, Tablet, SmartWatch, Laptop oder Personal Digital Assistant (PDA) sein. Jegliche andere geeignete tragbare elektronische Geräte sind ebenfalls möglich. Ein Fahrzeugschlüssel kann beispielsweise entsprechende Schalter oder Knöpfe aufweisen. Ein Smartphone kann beispielsweise ein Display aufweisen, auf welchem dem Nutzer, z.B. mittels einer geeigneten App (Applikation), entsprechende Schaltflächen angezeigt werden können.

Dabei kann es beispielsweise erforderlich sein, dass ein Nutzer den Schalter oder die Schaltfläche innerhalb eines bestimmten Zeitraumes vor dem Empfang des Anfragesignals in dem elektronischen Gerät 30 betätigt. Beispielsweise kann ein Nutzer beim Verlassen seines Hauses die Funktion der Transpondereinheit 32 durch betätigen des Schalters oder der Schaltfläche freigeben. Der bestimmte Zeitraum kann dabei beispielsweise wenige Sekunden aber auch bis zu wenige Minuten lang sein. Der Nutzer kann den Schalter oder die Schaltfläche beispielsweise auch noch für einen bestimmten Zeitraum nach dem Empfang des Anfragesignals betätigen. Dieser Zeitraum kann beispielsweise einige Sekunden, z.B. bis zu 30 Sekunden oder bis zu 60 Sekunden, betragen.

Bezugnehmend auf Figur 4 wird beispielhaft ein Verfahren zur Zugangsverifizierung beschrieben. Zunächst kann dabei, beispielsweise auf ein auslösendes Ereignis hin, ein Anfragesignal von dem Steuergerät 20 an das elektronische Gerät 30 gesendet werden (Schritt 401). Das elektronische Gerät 30 kann daraufhin den Ladezustand der Batterie 31 prüfen (Schritt 402). Ist die Batterie 31 nicht ausreichend geladen, kann ein Antwortsignal an das Steuergerät 20 ausgesendet werden (Schritt 403). Die Transpondereinheit 32 kann dabei drahtlos von dem Steuergerät 20 mit Energie versorgt werden. Ist die Batterie 31 ausreichend geladen, kann weiterhin geprüft werden, ob innerhalb eines bestimmten Zeitraums vor oder nach dem Empfang des Anfragesignals ein Schalter oder eine Schaltfläche des elektronischen Gerätes 30 durch den Nutzer betätigt wurde (Schritt 404). Ist dies der Fall, kann wiederum ein Antwortsignal an das Steuergerät 20 gesendet werden (Schritt 403). Wurde jedoch vom Nutzer innerhalb des bestimmten Zeitraums vor oder nach dem Empfang des Anfragesignals kein Schalter oder keine Schaltfläche betätigt, dann wird der Vorgang abgebrochen und kein Antwortsignal an das Steuergerät 20 ausgesendet (Schritt 405).

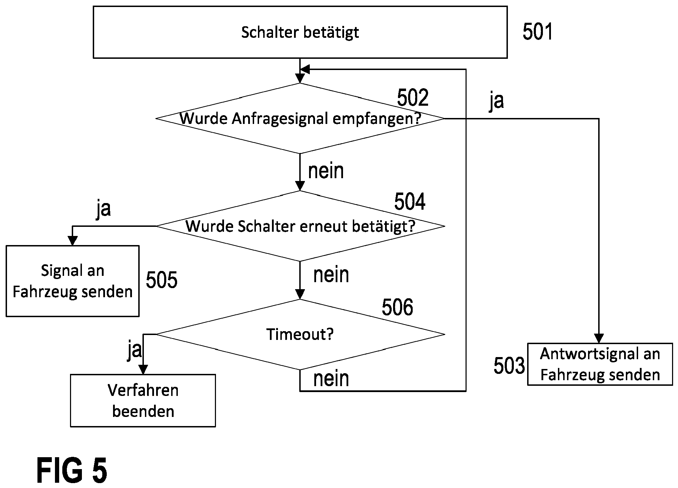

Nun Bezug nehmend auf Figur 5 wird ein weiteres Beispiel für ein Verfahren zur Zugangsverifizierung beschrieben. Hierbei kann zunächst die Betätigung eines Schalters oder einer Schaltfläche des elektronischen Gerätes 30 detektiert werden (Schritt 501). Anschließend wird geprüft, ob innerhalb eines bestimmten Zeitraumes nach dem Betätigen des Schalters oder der Schaltfläche ein Anfragesignal eines Steuergerätes 20 empfangen wurde (Schritt 502). Ist dies der Fall, kann ein Antwortsignal an das Steuergerät 20 gesendet werden (Schritt 503). Wurde kein Anfragesignal von dem Steuergerät 20 empfangen und wird erneut ein Schalter oder eine Schaltfläche des elektronischen Gerätes 30 betätigt (Schritt 504), dann kann ein entsprechendes Signal von dem elektronischen Gerät 30 an das Steuergerät 20 gesendet werden, welches ein Entriegeln des Fahrzeugs 10 auslöst (Schritt 505). Ein Anfragesignal von dem Fahrzeug 10 ist in diesem Fall nicht erforderlich, da der Wunsch des Nutzers, das Fahrzeug 10 entriegeln zu wollen, eindeutig erkannt wird. Wird hingegen nicht erneut ein Schalter oder eine Schaltfläche des elektronischen Gerätes 30 betätigt und ist seit dem ersten Betätigen des Schalters oder der Schaltfläche mehr als eine vorgegebene Zeit vergangen (Timeout, Schritt 506), dann wird das Verfahren abgebrochen und kein Signal an das Steuergerät 20 ausgesendet (Schritt 507).

Die Erfindung wurde am Beispiel eines Zugangs- und Startsystems für ein Fahrzeug 10 beschrieben. Bei dem Fahrzeug 10 kann es sich beispielsweise um einen PKW, LKW, Bus, Traktor, Flugzeug, Schiff oder um jegliche andere Art von Fahrzeug handeln.

Das beschriebene Verfahren kann nicht nur bei Zugangssystemen für Fahrzeuge, sondern beispielsweise auch bei elektronischen Zahlungssystemen zum Einsatz kommen.

## Patentansprüche

1. Zugangssystem mit einem in einem Fahrzeug (10) angeordneten Steuergerät (20) und einem tragbaren elektronischen Gerät (30), wobei
das tragbare elektronische Gerät (30) eine Batterie (31) aufweist die dazu ausgebildet ist, verschiedene weitere Komponenten des tragbaren elektronischen Gerätes (30) mit Energie zu versorgen;
das tragbare elektronische Gerät (30) eine Transpondereinheit (32) aufweist, welche durch das Steuergerät (20) drahtlos mit Energie versorgt werden kann;
das Steuergerät (20) dazu ausgebildet ist, ein Anfragesignal an das tragbare elektronische Gerät (30) zu senden;
das tragbare elektronische Gerät (30) dazu ausgebildet ist, auf den Erhalt eines Anfragesignals hin zu prüfen, ob eine Energieversorgung durch die Batterie (31) möglich ist;
das tragbare elektronische Gerät (30) weiterhin dazu ausgebildet ist, wenn eine Energieversorgung durch die Batterie (31) nicht möglich ist, eine drahtlose Energieversorgung der Transpondereinheit (32) durch das Steuergerät (20) bereitzustellen und ein Antwortsignal an das Steuergerät (20) zu senden; und
das tragbare elektronische Gerät (30) weiterhin dazu ausgebildet ist, wenn eine Energieversorgung durch die Batterie (31) möglich ist und innerhalb eines bestimmten Zeitraumes vor oder nach dem Empfang des Anfragesignals ein Schalter oder eine Schaltfläche des elektronischen Gerätes (30) durch einen Nutzer betätigt wurde, ein Antwortsignal an das Steuergerät (20) zu senden;
wobei das Fahrzeug (10) entriegelt wird, wenn anhand des Antwortsignals das elektronische Gerät (30) als zu dem Fahrzeug (10) gehörig erkannt wird.

2. Zugangssystem nach Anspruch 1, wobei das Fahrzeug (10) verschlossen bleibt, wenn das Steuergerät (20) innerhalb eines bestimmten Zeitraumes nach dem Aussenden eines Anfragesignals von dem tragbaren elektronischen Gerät (30) kein Antwortsignal oder kein gültiges Antwortsignal empfängt.

3. Zugangssystem nach Anspruch 1 oder 2, wobei das Steuergerät (20) entweder
in regelmäßigen Abständen Anfragesignale aussendet; oder
ein Anfragesignal nur auf ein auf ein auslösendes Ereignis hin aussendet.

4. Zugangssystem nach Anspruch 3, wobei das auslösende Ereignis das Betätigen eines Türgriffes des Fahrzeugs (10) oder das Detektieren einer Annäherung des elektronischen Gerätes (30) an das Fahrzeug (10) aufweist.

5. Zugangssystem nach einem der Ansprüche 1 bis 4, wobei der bestimmte Zeitraum vor oder nach dem Empfang des Anfragesignals wenige Sekunden oder wenige Minuten beträgt.

6. Zugangssystem nach einem der Ansprüche 1 bis 5, wobei eine Versorgung mit Energie durch die Batterie (31) möglich ist, wenn ein Ladezustand der Batterie (31) einen vorgegebenen Grenzwert überschreitet.

7. Zugangssystem nach einem der Ansprüche 1 bis 6, wobei das elektronische Gerät (30) eines aufweist von einem Fahrzeugschlüssel, Mobiltelefon, Smartphone, Tablet, SmartWatch, Laptop oder Personal Digital Assistant.

8. Verfahren zur Zugangsverifizierung in einem Fahrzeug (10), wobei das Fahrzeug (10) ein Zugangssystem mit einem in dem Fahrzeug (10) angeordneten Steuergerät (20) und einem tragbaren elektronischen Gerät (30) aufweist, wobei das tragbare elektronische Gerät (30) eine Batterie (31) aufweist die dazu ausgebildet ist, verschiedene Komponenten des tragbaren elektronischen Gerätes (30) mit Energie zu versorgen, wobei das tragbare elektronische Gerät (30) eine Transpondereinheit (32) aufweist, welche durch das Steuergerät (20) drahtlos mit Energie versorgt werden kann, und wobei das Verfahren aufweist:
Aussenden eines Anfragesignals von dem Steuergerät (20) an das tragbare elektronische Gerät (30);
auf den Erhalt eines Anfragesignals hin, Prüfen durch das elektronische Gerät (30), ob eine Energieversorgung durch die Batterie (31) möglich ist;
wenn eine Energieversorgung durch die Batterie (31) nicht möglich ist, Bereitstellen einer drahtlosen Energieversorgung der Transpondereinheit (32) durch das Steuergerät (20) und Senden eines Antwortsignals von dem elektronischen Gerät (30) an das Steuergerät (20); und
wenn eine Energieversorgung durch die Batterie (31) möglich ist und innerhalb eines bestimmten Zeitraumes vor oder nach dem Empfang des Anfragesignals ein Schalter oder eine Schaltfläche des elektronischen Gerätes (30) durch einen Nutzer betätigt wurde, Senden eines Antwortsignals von dem elektronischen Gerät (30) an das Steuergerät (20); und
Entriegeln des Fahrzeugs, wenn anhand des Antwortsignals das elektronische Gerät (30) als zu dem Fahrzeug (10) gehörig erkannt wird.

9. Fahrzeug (10) das ein Zuqanqssystem nach einem der Ansprüche 1 bis 7 aufweisst mit einem in einem Fahrzeug (10) angeordneten Steuergerät (20) und einem tragbaren elektronischen Gerät (30) aufweist, wobei
das tragbare elektronische Gerät (30) eine Batterie (31) aufweist die dazu ausgebildet ist, verschiedene weitere Komponenten des tragbaren elektronischen Gerätes (30) mit Energie zu versorgen;
das tragbare elektronische Gerät (30) eine Transpondereinheit (32) aufweist welche durch das Steuergerät (20) drahtlos mit Energie versorgt werden kann;
das Steuergerät (20) dazu ausgebildet ist ein Anfragesignal an das tragbare elektronische Gerät (30) zu senden;
das tragbare elektronische Gerät (30) dazu ausgebildet ist, auf den Erhalt eines Anfragesignals hin zu prüfen, ob eine Energieversorgung durch die Batterie (31) möglich ist;
das tragbare elektronische Gerät (30) weiterhin dazu ausgebildet ist, wenn eine Energieversorgung durch die Batterie (31) nicht möglich ist, eine drahtlose Energieversorgung der Transpondereinheit (32) durch das Steuergerät (20) bereitzustellen und ein Antwortsignal an das Steuergerät (20) zu senden; und
das tragbare elektronische Gerät (30) weiterhin dazu ausgebildet ist, wenn eine Energieversorgung durch die Batterie (31) möglich ist und innerhalb eines bestimmten Zeitraumes vor oder nach dem Empfang des Anfragesignals ein Schalter oder eine Schaltfläche des elektronischen Gerätes (30) durch einen Nutzer betätigt wurde, ein Antwortsignal an das Steuergerät (20) zu senden;
wobei das Fahrzeug (10) entriegelt wird, wenn anhand des Antwortsignals das elektronische Gerät (30) als zu dem Fahrzeug (10) gehörig erkannt wird.

## Claims

1. Access system including a control unit (20) arranged in a vehicle (10), and a portable electronic device (30), wherein
the portable electronic device (30) includes a battery (31), which is designed to supply various further components of the portable electronic device (30) with power;
the portable electronic device (30) includes a transponder unit (32), which can be wirelessly supplied with power by the control unit (20);
the control unit (20) is designed to send a request signal to the portable electronic device (30);
the portable electronic device (30) is designed to check, upon receipt of a request signal, whether a power supply by the battery (31) is possible;
the portable electronic device (30) is also designed to provide a wireless power supply to the transponder unit (32) by the control unit (20) and to send a response signal to the control unit (20) for the case in which a power supply by the battery (31) is not possible; and
the portable electronic device (30) is also designed to send a response signal to the control unit (20) for the case in which a power supply by the battery (31) is possible and a switch or a button of the electronic device (30) has been actuated by a user within a specific time period before or after the receipt of the request signal;
wherein the vehicle (10) is unlocked if the electronic device (30) is recognized on the basis of the response signal as belonging to the vehicle (10).

2. Access system according to Claim 1, wherein the vehicle (10) remains locked if the control unit (20) does not receive a response signal or a valid response signal within a specific time period after the emission of a request signal from the portable electronic device (30).

3. Access system according to Claim 1 or 2, wherein the control unit (20) either
emits request signals at regular intervals; or
emits a request signal only in response to a triggering event.

4. Access system according to Claim 3, wherein the triggering event includes the actuation of a door handle of the vehicle (10) or the detection of an approach by the electronic device (30) to the vehicle (10).

5. Access system according to one of Claims 1 to 4, wherein the specific time period before or after the receipt of the request signal is a few seconds or a few minutes.

6. Access system according to one of Claims 1 to 5, wherein a supply with power by the battery (31) is possible if the state of charge of the battery (31) exceeds a predefined limit value.

7. Access system according to one of Claims 1 to 6, wherein the electronic device (30) comprises either a vehicle key, a mobile phone, a smartphone, a tablet, a smartwatch, a laptop, or a personal digital assistant.

8. Method for access verification in a vehicle (10), wherein the vehicle (10) has an access system that includes a control unit (20) arranged in the vehicle (10), and a portable electronic device (30), wherein the portable electronic device (30) includes a battery (31), which is designed to supply various components of the portable electronic device (30) with power, wherein the portable electronic device (30) includes a transponder unit (32), which can be wirelessly supplied with power by the control unit (20), and wherein the method includes:
emitting a request signal from the control unit (20) to the portable electronic device (30);
upon receipt of a request signal, checking by the electronic device (30) whether a power supply by the battery (31) is possible;
if a power supply by the battery (31) is not possible, providing a wireless power supply to the transponder unit (32) by the control unit (20) and sending a response signal from the electronic device (30) to the control unit (20); and
if a power supply by the battery (31) is possible and a switch or a button of the electronic device (30) has been actuated by a user within a specific time period before or after the receipt of the request signal, sending a response signal from the electronic device (30) to the control unit (20); and
unlocking the vehicle if the electronic device (30) is recognized on the basis of the response signal as belonging to the vehicle (10).

9. Vehicle (10) that has an access system according to one of Claims 1 to 7 that includes a control unit (20) arranged in a vehicle (10), and a portable electronic device (30), wherein
the portable electronic device (30) includes a battery (31), which is designed to supply various further components of the portable electronic device (30) with power;
the portable electronic device (30) includes a transponder unit (32), which can be wirelessly supplied with power by the control unit (20);
the control unit (20) is designed to send a request signal to the portable electronic device (30);
the portable electronic device (30) is designed to check, upon receipt of a request signal, whether a power supply by the battery (31) is possible;
the portable electronic device (30) is also designed to provide a wireless power supply to the transponder unit (32) by the control unit (20) and to send a response signal to the control unit (20) for the case in which a power supply by the battery (31) is not possible; and
the portable electronic device (30) is also designed to send a response signal to the control unit (20) for the case in which a power supply by the battery (31) is possible and a switch or a button of the electronic device (30) has been actuated by a user within a specific time period before or after the receipt of the request signal;
wherein the vehicle (10) is unlocked if the electronic device (30) is recognized on the basis of the response signal as belonging to the vehicle (10).

## Revendications

1. Système d'accès comprenant un dispositif de commande (20) disposé dans un véhicule (10) et un dispositif électronique portable (30),
le dispositif électronique portable (30) comportant une batterie (31) qui est conçue pour alimenter en énergie divers autres composants du dispositif électronique portable (30) ;
le dispositif électronique portable (30) comportant une unité formant transpondeur (32) qui peut être alimentée en énergie sans fil par le dispositif de commande (20) ;
le dispositif de commande (20) étant conçu pour envoyer un signal de requête au dispositif électronique portable (30) ;
le dispositif électronique portable (30) étant conçu pour vérifier, à la réception d'un signal de requête, si l'alimentation en énergie à partir de la batterie (31) est possible ;
le dispositif électronique portable (30) étant en outre conçu, si une alimentation en énergie à partir de la batterie (31) n'est pas possible, pour fournir une alimentation en énergie sans fil à l'unité formant transpondeur (32) par le biais du dispositif de commande (20) et pour envoyer une signal de réponse au dispositif de commande (20) ; et
le dispositif électronique portable (30) étant en outre conçu, si l'alimentation en énergie à partir de la batterie (31) est possible et si un interrupteur ou un bouton du dispositif électronique (30) est actionné par un utilisateur dans un laps de temps déterminé avant ou après la réception du signal de requête, pour envoyer un signal de réponse à l'unité de commande (20) ;
le véhicule (10) étant déverrouillé lorsque le dispositif électronique (30) est reconnu comme appartenant au véhicule (10) sur la base du signal de réponse.

2. Système d'accès selon la revendication 1, le véhicule (10) restant fermé si le dispositif de commande (20) ne reçoit pas de signal de réponse ou de signal de réponse valide dans un laps de temps déterminé après l'envoi d'un signal de requête par le dispositif électronique portable (30).

3. Système d'accès selon la revendication 1 ou 2, l'unité de commande (20) envoyant des signaux de requête à intervalles réguliers ; ou
envoyant uniquement un signal de requête en réponse à un événement déclencheur.

4. Système d'accès selon la revendication 3, l'événement déclencheur comprenant l'actionnement d'une poignée de porte du véhicule (10) ou la détection que le dispositif électronique (30) approche du véhicule (10).

5. Système d'accès selon l'une des revendications 1 à 4, le laps de temps déterminé avant ou après la réception du signal de requête étant de quelques secondes ou de quelques minutes.

6. Système d'accès selon l'une des revendications 1 à 5, un apport d'énergie à partir de la batterie (31) étant possible si un état de charge de la batterie (31) dépasse une valeur limite spécifiée.

7. Système d'accès selon l'une des revendications 1 à 6, le dispositif électronique (30) comportant l'un parmi une clé de véhicule, un téléphone mobile, un Smartphone, une tablette, une montre intelligente, un ordinateur portable ou un assistant numérique personnel.

8. Procédé de vérification d'accès dans un véhicule (10), le véhicule (10) comportant un système d'accès pourvu d'un dispositif de commande (20) disposé dans le véhicule (10) et d'un dispositif électronique portable (30), le dispositif électronique portable (30) comportant une batterie (31) qui est conçue pour alimenter en énergie divers composants du dispositif électronique portable (30), le dispositif électronique portable (30) comportant une unité formant transpondeur (32) qui peut être alimentée en énergie sans fil par le dispositif de commande (20), et le procédé comportant les étapes suivantes :
envoyer un signal de requête par le biais du dispositif de commande (20) au dispositif électronique portable (30) ;
à la réception d'un signal de requête, vérifier à l'aide du dispositif électronique (30) si l'alimentation en énergie à partir de la batterie (31) est possible ;
si une alimentation électrique à partir de la batterie (31) n'est pas possible, fournir une alimentation électrique sans fil à l'unité formant transpondeur (32) par le biais du dispositif de commande (20) et envoyer un signal de réponse par le biais du dispositif électronique (30) au dispositif de commande ( 20) ; et
si l'alimentation en énergie à partir de la batterie (31) est possible et si un interrupteur ou un bouton du dispositif électronique (30) a été actionné par un utilisateur pendant un laps de temps avant ou après la réception du signal de requête, envoyer un signal de réponse par le biais du dispositif électronique (30) à l'unité de commande (20) ; et
déverrouiller le véhicule lorsque le dispositif électronique (30) est reconnu comme appartenant au véhicule (10) sur la base du signal de réponse.

9. Véhicule (10) qui comporte un système d'accès selon l'une des revendications 1 à 7 comprenant un dispositif de commande (20) disposé dans un véhicule (10) et un dispositif électronique portable (30),
le dispositif électronique portable (30) comportant une batterie (31) qui est conçue pour alimenter en énergie divers autres composants du dispositif électronique portable (30) ;
le dispositif électronique portable (30) comportant une unité formant transpondeur (32) qui peut être alimentée en énergie sans fil par le dispositif de commande (20) ;
le dispositif de commande (20) étant conçu pour envoyer un signal de requête au dispositif électronique portable (30) ;
le dispositif électronique portable (30) étant conçu pour vérifier, à la réception d'un signal de requête, si l'alimentation en énergie à partir de la batterie (31) est possible ;
le dispositif électronique portable (30) étant en outre conçu, si une alimentation en énergie à partir de la batterie (31) n'est pas possible, pour fournir une alimentation en énergie sans fil à l'unité formant transpondeur (32) par le biais du dispositif de commande (20) et pour envoyer une signal de réponse au dispositif de commande (20) et
le dispositif électronique portable (30) étant en outre conçu, si l'alimentation en énergie à partir de la batterie (31) est possible et si un interrupteur ou un bouton du dispositif électronique (30) est actionné par un utilisateur dans un laps de temps déterminé avant ou après la réception du signal de requête, pour envoyer un signal de réponse à l'unité de commande (20) ;
le véhicule (10) étant déverrouillé lorsque le dispositif électronique (30) est reconnu comme appartenant au véhicule (10) sur la base du signal de réponse.
